(19) Europäisches Patentamt
European Patent Office
Office européen des brevets

(11) **EP 4 439 766 A1**

(12) **EUROPEAN PATENT APPLICATION**
published in accordance with Art. 153(4) EPC

(43) Date of publication:
**02.10.2024 Bulletin 2024/40**

(21) Application number: **23816377.8**

(22) Date of filing: **31.05.2023**

(51) International Patent Classification (IPC):
*H01M 10/056* (2010.01)    *H01M 10/052* (2010.01)

(52) Cooperative Patent Classification (CPC):
**H01M 10/052; H01M 10/056;** Y02E 60/10

(86) International application number:
**PCT/KR2023/007478**

(87) International publication number:
**WO 2023/234717 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.05.2022 KR 20220066951**

(71) Applicant: **LG Energy Solution, Ltd.**
**Seoul 07335 (KR)**

(72) Inventors:
• **NAM, Sunghyun**
  **Daejeon 34122 (KR)**
• **HAN, Hyeaeun**
  **Daejeon 34122 (KR)**
• **KIM, Dong Kyu**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD FOR PRODUCING COMPOSITE SOLID ELECTROLYTE**

(57)    The present invention relates to a method for preparing a composite solid electrolyte having high ionic conductivity and capable of continuous process and mass production.

【Figure 1】

**Description**

[Technical Field]

This application claims the benefits of priorities based on Korean Patent Application No. 10-2022-0066951 filed on May 31, 2022 and Korean Patent Application No. 10-2023-0070146 filed on May 31, 2023, the entire contents of which are incorporated as part of this specification.
The present invention relates to a preparation method of a composite solid electrolyte.

[Background Art]

Since a lithium-ion battery using a liquid electrolyte has a structure in which the negative electrode and the positive electrode are partitioned by a separator, if the separator is damaged by deformation or external impact, a short circuit may occur, which may lead to dangers such as overheating or explosion. Therefore, it can be said that the development of a solid electrolyte that can secure safety in the field of the lithium-ion secondary battereis is a very important task.
A lithium secondary battery using a solid electrolyte has the advantages of increasing the safety of the battery, preventing leakage of the electrolyte solution, improving the reliability of the battery, and making it easy to manufacture a thin battery. In addition, since lithium metal can be used as a negative electrode, energy density can be improved, and thus it is expected to be applied to high-capacity secondary batteries for electric vehicles, in addition to small secondary batteries, and is in the limelight as a next-generation battery.
Among the solid electrolytes, a solid polymer electrolyte may use a polymer material made of an ion conductive material or an inorganic material such as an oxide or sulfide having ion conductive properties, and a composite solid electrolyte in which polymer materials and inorganic materials are mixed is also proposed.
Such a conventional composite solid electrolyte was prepared by preparing a solution or slurry in which a polymer and an inorganic material were mixed and dispersed, and then casting the solution on a substrate by solution casting and drying it at a high temperature. However, the conventional preparation technology of the composite solid electrolyte has a limitation that it is difficult to prepare the composite solid electrolyte with improved ionic conductivity due to the non-uniform distribution of inorganic particles in the composite solid electrolyte because the uniform dispersion of inorganic materials in the polymer solution is not smooth.
In order to overcome these limitations of conventional composite solid electrolytes, there is a demand for technology which is capable of improving the ionic conductivity of a composite solid electrolyte including a polymer and an inorganic material uniformly dispersed therein, and which is for a method for preparing a composite solid electrolyte capable of performing in a continuous process.

[Prior Art Document]

[Patent Document]

(Patent Document 1) Korean Laid-open Patent Publication No. 10-2017-0045011

[Disclosure]

[Technical Problem]

It is an object of the present invention to provide a method for preparing a composite solid electrolyte capable of improving ionic conductivity and performing a continuous process.
In addition, it is another object of the present invention to provide an all-solid-state battery including the composite solid electrolyte prepared by the preparation method described above.

[Technical Solution]

In order to achieve the above objects, the present invention provides a method for preparing a composite solid electrolyte, including the processes of:

(1) a first process of preparing a first composite layer by mixing a first polymer, which is a UV-curable polymer, a photo-initiator, and a ceramic compound;
(2) a second process of preparing a ceramic ion conductor by sintering the first composite layer; and

(3) a third process of coating and curing the ceramic ion conductor layer with a composition containing a second polymer and a lithium salt to prepare a second composite layer,

wherein the first to third processes are performed continuously.

In addition, the present invention provides a composite solid electrolyte prepared by the preparation method of the present invention, including a ceramic ion conductor layer containing a ceramic compound; a second polymer; and a lithium salt.

In addition, the present invention provides an all-solid-state battery containing a composite solid electrolyte prepared by the preparation method of the present invention.

[Advantageous Effects]

The method for preparing a composite solid electrolyte according to the present invention can effectively improve the ion conduction of lithium ions by forming a ceramic ion conductor containing a first polymer, which is a UV curable polymer, and a ceramic compound, and can improve the ionic conductivity of the composite solid electrolyte by using the ceramic ion conductor.

In addition, the preparation method of the composite solid electrolyte according to the present invention can prepare the composite solid electrolyte in a continuous process, and enables mass production.

[Description of Drawings]

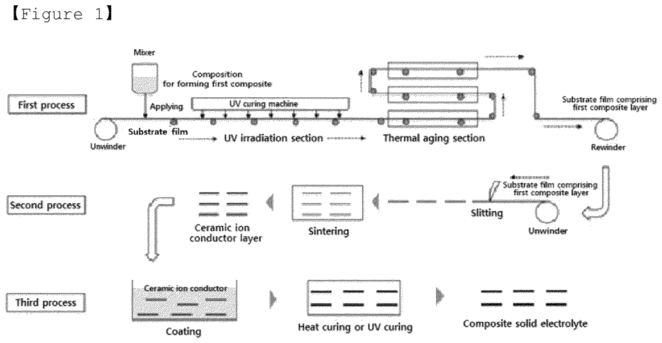

FIG. 1 is a flow chart of the preparation method of the composite solid electrolyte of the present invention.

[Best Mode]

Hereinafter, the present invention will be described in more detail to aid understanding of the present invention.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

The conventional preparation method of the composite solid electrolyte was by coating a solution or slurry in which a polymer and an inorganic material were mixed and dispersed on a substrate film by a method such as solution casting, and drying it. However, this method had a problem that the ionic conductivity of the solid electrolyte was not improved due to the non-uniform dispersion of inorganic materials in the polymer solution.

In order to improve this, the present invention tried to provide a method for preparing a composite solid electrolyte in which the particles of the ceramic compound are uniformly dispersed in the ceramic ion conductor layer and the ionic conductivity is improved, through the ceramic ion conductor layer prepared using a first polymer, which is an ultraviolet curable polymer, and a ceramic compound.

In the preparation method of the composite solid electrolyte, since the solution containing the first polymer, which is a UV curable polymer, and the ceramic compound is irradiated with ultraviolet rays and cured to prepare the first composite, the ceramic compound can be uniformly dispersed in the solution of the first polymer. By preparing a ceramic ion conductor in which the particles of the ceramic compound are uniformly dispersed, it can improve the ionic conduction of lithium ions and prepare a composite solid electrolyte with improved ionic conductivity. In addition, the preparation method of the composite solid electrolyte of the present invention can be prepared as a continuous process, and enables mass production.

**Method for preparing composite solid electrolyte**

The present invention relates to a method for preparing a composite solid electrolyte, and the method for preparing the composite solid electrolyte of the present invention comprises:

(1) a first process of preparing a first composite layer by mixing a first polymer, which is a UV-curable polymer, a photo-initiator, and a ceramic compound;
(2) a second process of preparing a ceramic ion conductor layer by sintering the first composite layer; and
(3) a third process of coating and curing the ceramic ion conductor layer with a composition containing a second polymer and a lithium salt to prepare a second composite layer.

The first to third processes may be performed continuously.

Hereinafter, the preparation method of the composite solid electrolyte according to the present invention will be described in detail for each step. FIG. 1 is a flow chart of a preparation method for a composite solid electrolyte according to certain embodiments of the present invention.

The first process may comprise the steps of:

(1-1) preparing a composition for forming a first composite containing a first polymer, which is a UV-curable polymer, a photo-initiator, and a ceramic compound;
(1-2) unwinding the substrate film using an unwinder and supplying it to a conveying path;
(1-3) applying the composition for forming the first composite onto the substrate film to form a coating film;
(1-4) transferring the substrate film on which the coating film is formed to an ultraviolet irradiation section, irradiating the coating film with ultraviolet rays, and then curing to prepare a first composite layer; and
(1-5) winding and recovering the substrate film including the first composite layer using a rewinder.

The step (1-1) is a step of preparing a composition for forming a first composite containing a first polymer, which is a UV-curable polymer, a photo-initiator and a ceramic compound.

The ultraviolet curable polymer refers to a polymer that forms cross-linkage using ultraviolet (UV) light. If the ultraviolet curable polymer is irradiated with ultraviolet (UV) light in the presence of a photo-initiator, a photopolymerization reaction is initiated to form optical cross-linkage. Accordingly, the UV curable polymer may have a physical property of exhibiting maximum absorbance in at least a part of the wavelength region or the entire region of the ultraviolet (for example, a wavelength of 300 nm to 400 nm) region in the absorbance spectrum for the wavelength.

The first polymer may include one or more selected from the group consisting of polyisocyanurate (PIR), epoxy, polyurethane, polyacrylate, and poly(methyl methacrylate) (PMMA) .

In the polyacrylate, examples of the UV curable acrylate-based monomer comprise hexanediol diacrylate (HDDA), tropropyleneglycoldiacrylate (TPGDA), ethyleneglycoldiacrylate (EGDA), trimethylolpropane triacrylate (TMPTA), trimethylolpropane ethoxylated triacrylate (TMPEOTA), glycerol propoxylated triacrylate (GPTA), pentaerythritol tetraacrylate (PETA), and dipentaerythritol hexaacrylate (DPHA), but are not limited thereto, and acrylate-based monomers commonly used in the art may be used without particular limitation.

The photo-initiator refers to a material that initiates a photopolymerization reaction when receiving ultraviolet light emitted from an ultraviolet light generator.

Examples of the photo-initiator comprise 1-hydroxycyclohexyl-phenyl ketone, 2-hydroxy-2-methyl-1-phenyl-1-propanone, 2-hydroxy-1-[4-(2-hydroxyethoxy)phenyl]2-methyl-1-propanone, methylbenzoyl formate, $\alpha,\alpha$-dimethoxy-$\alpha$-phenylacetophenone, 2-benzoyl-2-(dimethylamino)-1-[4-(4-morpholinyl)phenyl]-1-butanone, 2-methyl-1-[4[(methylthio)phenyl]-2-(4-morpholinyl)-1-propanone, diphenyl(2,4,6-trimethylbenzoyl)-phosphine oxide or bis(2,4,6-trimethylbenzoyl)-phenylphosphine oxide and the like, but are not limited thereto. In addition, as the photopolymerization initiator, a commercially available Irgacure 184, Irgacure 500, Irgacure 651, Irgacure 369, Irgacure 907, Darocur 1173, Darocur MBF, Irgacure 819, Darocur TPO, Irgacure 907, Esacure KIP 100F or the like can be used. The photopolymerization initiator may be used alone or in combination of two or more different types.

The content of the photo-initiator may be 1 to 5% by weight, based on the content of the first polymer. If the content of the photo-initiator is less than 1% by weight or exceeding 5% by weight based on the content of the first polymer, cross-linkage between the first polymer and the ceramic compound is not formed, making it difficult to form a first composite layer.

The ceramic compound may be an oxide-based or phosphate-based solid electrolyte. The oxide-based or phosphate-based solid electrolyte may be selected one or more from the group consisting of a Garnet type lithium-lanthanum-zirconium oxide based compound (LLZO, $Li_7La_3Zr_2O_{12}$), perovskite type lithium-lanthanum-titanium oxide based compound (LLTO, $Li_{3x}La_{2/3-x}TiO_3$), NASICON type lithium-aluminum-titanium phosphate based compound of phosphate system (LATP, $Li_{1+x}Al_xTi_{2-x}(PO_4)_3$), lithium-aluminum-germanium phosphate based compound (LAGP, $Li_{2.5}Al_{0.5}Ge_{1.5}(PO_4)_3$), lithium-silicon-titanium phosphate based compound (LSTP, $LiSiO_2TiO_2(PO_4)_3$), and lithium-lanthanum-zirconium-titanium oxide based compound (LLZTO). The oxide-based or phosphate-based solid electrolyte requires a sintering process at 1000 °C or higher because the grain boundary resistance is very high. Due to this, there are problems such as volatilization of lithium at high temperature, phase transition, and formation of impurity phases. However, the oxide-based or phosphate-based solid electrolyte generally has an ionic conductivity value of up to $10^{-4}$ ~ $10^{-3}$ S/cm at room temperature, is stable in a high voltage region, and is stable in air. Thus it has the advantage of being easy to synthesize and handle.

Therefore, it is possible to compensate for the disadvantages of each material through the preparation of a hybrid solid electrolyte by mixing the first polymer and a heterogeneous material according to the present invention.

Since the oxide-based or phosphate-based solid electrolyte does not easily burn or cause ignition even under high temperature conditions of 400 °C or higher, high temperature stability is high. Therefore, if the ceramic ion conductor includes the oxide-based or phosphate-based solid electrolyte, the mechanical strength of the composite solid electrolyte for the lithium secondary battery as well as high temperature stability and ionic conductivity can be improved.

The composition for forming the first composite may be prepared by adding a photo-initiator and a ceramic compound to a solution of the first polymer which is a UV-curable polymer.

The solvent used in the preparation of the solution of the first polymer may be a polar solvent, for example water. That is, the solution of the first polymer may be an aqueous solution.

The concentration of the solution of the first polymer can be appropriately adjusted in consideration of the extent to which the application process can proceed smoothly when the solution for forming the first composite is applied to the substrate film. For example, the first polymer may be contained in an amount of 5 to 20% by weight relative to the total weight of the aqueous solution of the first polymer. Specifically, may be contained in an amount of 5% by weight or more, 7% by weight or more, or 9% by weight or more and in an amount of 13% by weight or less, 17% by weight or less, or 20% by weight or less. If the first polymer containing is contained in an amount of less than 5% by weight, its concentration is so thin that it may run off when applied on a substrate film. If the first polymer is contained in an amount exceeding 20% by weight, it may be difficult to apply in the form of a uniform foil.

In addition, the ceramic compound may be contained in an amount of 1 part by weight or more to less than 10 parts by weight relative to 1 part by weight of the first polymer. More specifically, the weight ratio of the first polymer and the ceramic compound may be 1: 1, 1: 2, 1: 3, 1: 4, 1: 5, 1: 6, 1: 7, 1: 8 or 1: 9. If the ceramic compound is contained in an amount of less than 1 part by weight relative to 1 part by weight of the first polymer, there are problems in that after the sintering process which is a second process, because the linkage between ceramic compounds is not smooth, it is difficult to form a ceramic ion conductor with a cross-linked structure, and its mechanical properties are also weak and thus it is easily brittle or destroyed, thereby making the preparation of a composite solid electrolyte impossible. In addition, if the ceramic compound is contained in an amount exceeding 10 parts by weight relative to 1 part by weight of the first polymer, there are problems that since the ceramic compound is not uniformly dispersed in the first polymer, a phenomenon in which the particles of the ceramic compound are agglomerated with each other occurs, and a phase separation between the particles of the first polymer and the agglomerated ceramic compound occurs, thereby making it difficult to form a ceramic ion conductor layer, and as a result, a composite solid electrolyte with reduced ionic conductivity is prepared.

The step (1-2) is a step of unwinding the substrate film using an unwinder and supplying it to the conveying path.

The unwinder unwinds and supplies the substrate film wound in a roll shape to a predetermined conveying path, which may unwind and supply the substrate film by its own drive, and may unwind and supply the substrate film by the driving force of a rewinder that winds the substrate film including the first composite.

Accordingly, the first process of the present invention may be a roll-to-roll process.

The substrate film is not particularly limited as long as it can serve as a support to which the composition for forming the first composite solid electrolyte is applied. For example, the above substrate film may be stainless steel (SS), polyethylene terephthalate film, polytetrafluoroethylene film, polyethylene film, polypropylene film, polybutene film, polybutadiene film, vinyl chloride copolymer film, polyurethane film, ethylene-vinyl acetate film, ethylene-propylene copolymer film, ethylene-ethyl acrylate copolymer film, ethylene-methyl acrylate copolymer film, or polyimide film.

The step (1-3) is a step of applying the composition for forming the first composite onto the substrate film to form a coating film.

In the present invention, the coating method is also not particularly limited as long as it is a method capable of applying the composition for forming the first composite on the substrate film in the form of a film. For example, the coating method may be bar coating, roll coating, spin coating, slit coating, die coating, blade coating, comma coating, slot die coating, lip coating, spray coating, or solution casting.

In an embodiment of the present invention, a solution casting method may be used. More specifically, after putting the composition for forming the first composite prepared in the step (1-1) into a mixer, the mixer is placed on the substrate film, and the composition for forming the first composite is continuously cast on the substrate film supplied to the conveying path to form a coating film.

The step (1-4) is a step of transferring the substrate film on which the coating film is formed to an ultraviolet irradiation section, irradiating the coating film with ultraviolet rays, and then curing to prepare a first composite layer.

The wavelength of ultraviolet (UV) used in the curing reaction may be 200 to 400 nm.

Since the UV curing is fast, the first composite layer can be quickly prepared.

After the step (1-4), a step of thermally aging the substrate film including the first composite layer by transferring the substrate film including the first composite layer to a heat aging section may be further included.

The heat aging may be performed at 50 °C to 100 °C, and specifically, may be performed at 50 °C or more, 60 °C or more, or 70 °C or more, and at 80 °C or less, 90 °C or less, or 100 °C or less.

Through the heat aging, since the first composite layer can be further cured, the mechanical properties of the first composite layer can be improved by reducing the amount of unreacted functional groups in the first polymer. In addition, residual stress formed inside the first polymer during the coating and UV curing process can be alleviated. In addition, since the adhesive force between the substrate film and the first composite layer can be improved, it can solve the problem of the first composite layer being separated from the substrate during the process.

The step (1-5) is a step of winding and recovering the substrate film including the first composite layer using a rewinder.

The rewinder may wind and collect the substrate film including the first composite layer in a roll shape, and may wind the substrate film including the first composite layer by its own drive.

In the preparation method of the composite solid electrolyte of the present invention, the first process is a roll-to-roll process, and enables continuous preparation.

After the step (1-5), the second process may be continuously performed. The second process may comprise the steps of:

(2-1) unwinding the substrate film including the first composite layer using an unwinder, peeling and slitting the first composite layer from the substrate film; and
(2-2) sintering the slitted first composite layer to prepare a ceramic ion conductor layer.

The step (2-1) is a step of unwinding the substrate film including the first composite layer using an unwinder, and peeling and slitting the first composite layer from the substrate film.

The unwinder unwinds and supplies the substrate film including the first composite layer wound in a roll shape through a predetermined conveying path, which can unwind and supply the substrate film including the first composite layer by its own drive.

Then, after peeling the first composite layer from the substrate film, slitting is performed to a desired area.

The step (2-2) is a step of sintering the substrate film including the slitted first composite layer to prepare a ceramic ion conductor layer.

As used herein, the term "sintering" refers to a process of applying sufficient temperature and pressure to make the first composite layer into a lump of harder particles.

The ceramic ion conductor layer may be manufactured by sintering the first composite layer to thermally decompose the component of the first polymer, and sintering particles of the remaining ceramic compound.

Through the sintering process, the first polymer plays a role as a support so that the particles of the ceramic compound can be connected to each other, and the particles of the ceramic compound may be connected to each other to form a ceramic ion conductor having a cross-linked structure.

The ceramic ion conductor layer may include a cross-linked structure including a ceramic compound.

The ceramic ion conductor may play a role of forming an ion conduction path of lithium ions.

The sintering may be performed by properly selecting conditions sufficient to thermally decompose the component of the first polymer and to form an ion conductor layer of a cross-linked structure by connecting the particles of the ceramic compound to each other. For example, the sintering temperature may be performed at a temperature of 800 °C to 1300 °C, specifically the sintering temperature may be 850 °C or more, 900 °C or more, 950 °C or more, and may be 1300 °C or less, 1250 °C or less, 1200 °C or less.

After the step (2-2), the third process may be continuously performed. The third process may include the steps of,

(3-1) preparing a composition including a second polymer and a lithium salt;
(3-2) coating the ceramic ion conductor layer with the composition; and
(3-3) curing the ceramic ion conductor layer coated with the composition to prepare a second composite layer.

The second composite layer can prepare a composite solid electrolyte with improved ionic conductivity by including the ceramic ion conductor layer.

The step (3-1) is a step of preparing a composition including the second polymer and the lithium salt.

The second polymer may be a polymer having excellent solubility for the lithium salt and allowing the polymer solution to permeate well into the ceramic ion conductor so that preparation of the final composite solid electrolyte is easy. Specific examples of the second polymer may include one or more selected from the group consisting of polyvinyl alcohol (PVA), polyethylene oxide (PEO), polyacrylate, poly(methyl methacrylate) (PMMA), PSTFSI, polyurethane, nylon, poly(dimethylsiloxane), gelatin, methylcellulose, agar, dextran, poly(vinyl pyrrolidone), poly(acryl amide), poly(acrylic acid), starch-carboxymethyl cellulose, hyaluronic acid-methylcellulose, chitosan, poly(N-isopropylacrylamide), and amino-terminated polyethylene glycol (amino-terminated PEG).

In the present invention, the lithium salt is in a dissociated state inside the structure formed by the ceramic ion conductor layer to improve the ionic conductivity of the composite solid electrolyte. In addition, the lithium salt is mainly dissociated inside the second polymer, and in the second process, it can play a role of compensating for the loss of lithium ions generated from the particles of the ceramic compound during the high-temperature sintering process.

The lithium salt may comprise one or more selected from the group consisting of $LiNO_3$, $LiOH$, $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, $LiSCN$,

LiC(CF$_3$SO$_2$)$_3$, (CF$_3$SO$_2$)$_2$NLi, and (FSO$_2$)$_2$Nli.

The composition may be prepared by adding the lithium salt to the solution containing the second polymer.

The solvent used in preparing the solution of the second polymer may be a polar solvent, for example water. That is, the solution of the second polymer may be an aqueous polymer solution.

The concentration of the solution containing the second polymer may be appropriately adjusted in consideration of the extent to which the coating process for coating the ceramic ion conductor layer can proceed smoothly. For example, the second polymer may be contained in an amount of 5 to 20% by weight, based on the total weight of the solution of the second polymer, and specifically, may be contained in an amount of 5% by weight or more, 7% by weight or more, or 9% by weight or more, and in an amount of 13% by weight or less, 17% by weight or less, or 20% by weight or less. If the second polymer is contained in an amount of less than 5% by weight, since the concentration is too thin, the surface of the ceramic ion conductor layer cannot be coated. If the second polymer is contained in an amount exceeding 20% by weight, since the concentration is too high, it may be difficult to uniformly coat the surface of the ceramic ion conductor layer.

The molar ratio ([Li]/[G]) of molar concentration ([G]) of the second polymer and the lithium ([Li]) in the lithium salt may be 0.1 to 0.5, specifically 0.1 or more, 0.2 or more, or 0.3 or more, and may be 0.4 or less or 0.5 or less. If the molar ratio ([Li]/[G]) is less than 0.1, the content of the lithium salt is reduced, and the ionic conductivity of the composite solid electrolyte may be lowered, and if the molar ratio ([Li]/[G]) exceeds 0.5, the ionic conductivity may decrease due to aggregation of lithium ions. Therefore, the composite solid electrolyte according to the present invention requires the composition of the second polymer and an appropriate amount of lithium salt in the second composite layer.

The step (3-2) is a step of coating the ceramic ion conductor layer with the composition.

The coating method is not particularly limited as long as it is used in the art, and dipping, spraying, doctor blade or spin coating may be used, and dipping may be preferably used.

The step (3-3) is a step of curing the ceramic ion conductor layer coated with the composition to form the second composite layer.

The curing may be thermal curing or UV curing.

The UV curing is the same as described above.

The thermal curing may be performed in a state in which the ceramic ion conductor layer is immersed in the mixed solution.

The thermal curing step may be performed at 50 °C to 150 °C, but is not limited thereto. For example, the thermal curing step may be performed at 50 °C to 150 °C, 60 °C to 150 °C, 70 °C to 150 °C, 80 °C to 150 °C, 90 °C to 150 °C, 100 °C to 150 °C, 50 °C to 140 °C, 50 °C to 130 °C, 50 °C to 120 °C, 50 °C to 110 °C or 50 °C to 100 °C, but is not limited thereto. If the thermal curing step is performed below the temperature range, the formation of the second composite may be incomplete. If the thermal curing step is performed beyond the temperature range, it may be difficult to prepare a composite solid electrolyte due to thermal decomposition of the second polymer and lithium salts.

The ceramic ion conductor layer coated with the second composite layer is a composite solid electrolyte to be prepared in the present invention, and the composite solid electrolyte has improved ionic conductivity, and can specifically exhibit an ionic conductivity of 10$^{-5}$ S/cm or more. Although the composite solid electrolyte is a solid electrolyte, it can improve the performance of an all-solid-state battery by exhibiting an ionic conductivity equal to or higher than that of conventional liquid electrolytes.

The preparation method of the composite solid electrolyte of the present invention is a continuous process performed continuously and enables mass production.

The preparation method of the composite solid electrolyte of the present invention is a continuous process in which the first to third processes are continuously performed, and enables mass production.

**Composite solid electrolyte**

In addition, the present invention
relates to a composite solid electrolyte including a conductor layer containing a ceramic compound; a second polymer; and a lithium salt, wherein the composite solid electrolyte may be prepared by the preparation method of the present invention described above.

Details of the ceramic ion conductor layer, the second polymer, and the lithium salt are the same as described above.

The ceramic ion conductor layer may be obtained by sintering the above-described first composite layer. Accordingly, the ceramic ion conductor layer may include one cross-linked structure formed by connecting particles of the ceramic compound to each other. The first polymer plays a role of a support so that the particles of the ceramic compound can be connected to each other.

A conventional composite solid electrolyte was prepared by coating a solution or slurry, in which a polymer and an inorganic material were mixed and dispersed, on a substrate by a method such as a solution casting, and drying it.

However, this method had a problem that the ionic conductivity of the solid electrolyte is not improved due to the non-uniform dispersion and precipitation of the inorganic materials in the polymer solution.

In order to improve this, the present invention intends to provide a composite solid electrolyte including a ceramic ion conductor layer including a cross-linked structure forming an ion conduction path of lithium ions, a second polymer and a lithium salt. The ceramic ion conductor can play a role of improving the ionic conductivity of the composite solid electrolyte by uniformly dispersing particles of the ceramic compound therein.

The composite solid electrolyte may be in the form of a free-standing film. The free-standing film means a film capable of maintaining a film shape by itself without a separate support at room temperature and normal pressure.

Since the free-standing film exhibits elasticity to minimize brittleness and has characteristics as a support that stably contains lithium ions, it may be in a suitable form as a composite solid electrolyte.

In the present invention, the ionic conductivity of the composite solid electrolyte may be $10^{-5}$ S/cm or more.

Although the composite solid electrolyte is a solid electrolyte, it can improve the performance of an all-solid-state battery by exhibiting an ionic conductivity equivalent to or higher than ionic conductivity of conventional liquid electrolytes.

**All-solid-state battery**

The present invention also relates to an all-solid-state battery including the composite solid electrolyte, wherein the all-solid-state battery includes a negative electrode, a positive electrode, and a composite solid electrolyte interposed between the negative electrode and the positive electrode, and the composite solid electrolyte is prepared by the preparation method described above, and has the above-described characteristics.

Specifically, since the composite solid electrolyte includes a ceramic ion conductor and thus improves ion conductor of lithium ions, it may be suitable as an electrolyte for an all-solid-state battery.

In the present invention, the positive electrode contained in the all-solid-state battery includes a positive electrode active material layer, and the positive electrode active material layer may be formed on one surface of the positive electrode current collector.

The positive electrode active material layer includes a positive electrode active material, a binder, and a conductive material.

In addition, the positive electrode active material is not particularly limited as long as it is a material capable of reversibly intercalating and de-intercalating lithium ions, and for example, may be, but is not limited to, layered compounds or compounds substituted with one or more transition metals, such as lithium cobalt oxide ($LiCoO_2$), lithium nickel oxide ($LiNiO_2$), Li $[Ni_xCo_yMn_zM_v]O_2$ (wherein, M is any one or two or more elements selected from the group consisting of Al, Ga and In; $0.3 \leq x < 1.0$, $0 \leq y$, $z \leq 0.5$, $0 \leq v \leq 0.1$, $x+y+z+v=1$), $Li(Li_aM_{b-a-b'}M'_{b'})O_{2-c}A_c$ (wherein, $0 \leq a \leq 0.2$, $0.6 \leq b \leq 1$, $0 \leq b' \leq 0.2$, $0 \leq c \leq 0.2$; M comprises Mn and one or more selected from the group consisting of Ni, Co, Fe, Cr, V, Cu, Zn and Ti; M' is one or more selected from the group consisting of Al, Mg and B, and A is one or more selected from the group consisting of P, F, S and N); lithium manganese oxide such as Formula $Li_{1+y}Mn_{2-y}O_4$ (wherein, y is 0 - 0.33), $LiMnO_3$, $LiMn_2O_3$, $LiMnO_2$; lithium copper oxide ($Li_2CuO_2$); vanadium oxide such as $LiV_3O_8$, $LiFe_3O_4$, $V_2O_5$, $Cu_2V_2O_7$; Ni site type lithium nickel oxide represented by Formula $LiNi_{1-y}MyO_2$ (wherein, M=Co, Mn, Al, Cu, Fe, Mg, B or Ga, y=0.01 - 0.3); lithium manganese composite oxide represented by Formula $LiMn_{2-y}M_yO_2$ (wherein, M=Co, Ni, Fe, Cr, Zn or Ta, y=0.01 - 0.1) or $Li_2Mn_3MO_8$ (wherein, M=Fe, Co, Ni, Cu or Zn); $LiMn_2O_4$ in which part of Li in the Formula is substituted with alkaline earth metal ions; disulfide compounds; and $Fe_2(MoO_4)_3$.

In addition, the positive electrode active material may be contained in an amount of 40 to 80% by weight based on the total weight of the positive electrode active material layer. Specifically, the content of the positive electrode active material may be 40% by weight or more or 50% by weight or more, and may be 70% by weight or less or 80% by weight or less. If the content of the positive electrode active material is less than 40% by weight, the connectivity between the wet positive electrode active material layer and the dry positive electrode active material layer may be insufficient. If the content of the positive electrode active material exceeds 80 % by weight, mass transfer resistance may be increased.

In addition, the binder is a component that assists bonding between the positive electrode active material and the conductive material, and assists in bonding to the current collector. The binder may comprise one or more selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise one or more selected from the group consisting of styrene-butadiene rubber, polytetrafluoroethylene, carboxymethyl cellulose, polyacrylic acid, lithium polyacrylate, and polyvinylidene fluoride.

In addition, the binder may be contained in an amount of 1% by weight to 30% by weight based on the total weight of the positive electrode active material layer, and specifically, the content of the binder may be 1% by weight or more or 3% by weight or more, and may be 15% by weight or less or 30% by weight or less. If the content of the binder is less than 1% by weight, the adhesive force between the positive electrode active material and the positive electrode current collector may be lowered. If the content of the binder exceeds 30% by weight, the adhesive force is improved, but the content of the positive electrode active material is reduced by that amount, and thus the capacity of the battery may be lowered.

In addition, the conductive material is not particularly limited as long as it prevents side reactions in the internal environment of the all-solid-state battery and has excellent electrical conductivity without causing chemical changes in the battery. The conductive material may be typically graphite or conductive carbon, and for example, graphite such as natural graphite, artificial graphite; carbon black such as carbon black, acetylene black, Ketjen black, Denka black, thermal black, channel black, furnace black, lamp black, thermal black; carbon-based materials whose crystal structure is graphene or graphite; conductive fibers such as carbon fibers and metal fibers; carbon fluoride; metal powders such as aluminum powder and nickel powder; conductive whiskers such as zinc oxide and potassium titanate; conductive oxides such as titanium oxide; and conductive polymers such as polyphenylene derivatives may be used alone or in combination of two or more thereof as the conductive material, but is not necessarily limited thereto.

The conductive material may be generally contained in an amount of 0.5% by weight to 30% by weight based on the total weight of the positive electrode active material layer. Specifically, the content of the conductive material may be 0.5% by weight or more or 1% by weight or more, and may be 20% by weight or less or 30% by weight or less. If the content of the conductive material is too small, i.e., less than 0.5 % by weight, it is difficult to expect an effect of improving electrical conductivity or the electrochemical properties of the battery may be deteriorated. If the content of the conductive material exceeds 30% by weight and thus is too large, the amount of the positive electrode active material may be relatively small, so that the capacity and energy density may be lowered. A method for incorporating the conductive material to the positive electrode is not particularly limited, and a conventional method known in the art, such as coating on the positive electrode active material, may be used.

In addition, the positive electrode current collector supports the positive electrode active material layer, and serves to transfer electrons between the external conductive wire and the positive electrode active material layer.

The positive electrode current collector is not particularly limited as long as it has high electrical conductivity without causing chemical changes in the all-solid-state battery. For example, as the positive electrode current collector, copper, stainless steel, aluminum, nickel, titanium, palladium, sintered carbon; a copper or stainless steel surface-treated with carbon, nickel, silver, etc.; an aluminum-cadmium alloy, etc. may be used.

The positive electrode current collector may have a fine irregularity structure on the surface of the positive electrode current collector or have a three-dimensional porous structure, in order to strengthen the bonding force with the positive electrode active material layer. Accordingly, the positive electrode current collector may comprise various forms such as a film, a sheet, a foil, a mesh, a net, a porous body, a foam, and a non-woven fabric.

The positive electrode as described above may be prepared by the conventional method, and specifically, the positive electrode is manufactured by coating and drying a composition for forming the positive electrode active material layer prepared by mixing the positive electrode active material, the conductive material and the binder in an organic solvent, onto the positive electrode current collector, and optionally compression-molding it onto the current collector to improve the electrode density. At this time, as the organic solvent, it is preferable to use one that can uniformly disperse the positive electrode active material, the binder, and the conductive material and that evaporates easily. Specifically, acetonitrile, methanol, ethanol, tetrahydrofuran, water, isopropyl alcohol and the like are exemplified.

In the present invention, the negative electrode comprised in the all-solid-state battery comprises a negative electrode active material layer, and the negative electrode active material layer may be formed on one surface of the negative electrode current collector.

The negative electrode active material may be a material capable of reversibly intercalating or de-intercalating lithium ion (Li$^+$), a material capable of reacting with lithium ion to reversibly form a lithium-containing compound, lithium metal or a lithium alloy.

The material capable of reversibly intercalating or de-intercalating lithium ions (Li$^+$) may be, for example, crystalline carbon, amorphous carbon or mixtures thereof. The material capable of reacting with the lithium ions (Li$^+$) to reversibly form a lithium-containing compound may be, for example, tin oxide, titanium nitrate, or silicon. The lithium alloy may be, for example, an alloy of lithium (Li) and the metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically, may be in the form of a lithium metal thin film or lithium metal powder.

The negative electrode active material may be contained in an amount of 40 to 80% by weight based on the total weight of the negative electrode active material layer. Specifically, the content of the negative electrode active material may be 40 % by weight or more or 50 % by weight or more, and may be 70 % by weight or less or 80 % by weight or less. If the content of the negative electrode active material is less than 40% by weight, the connectivity between the wet negative electrode active material layer and the dry negative electrode active material layer may be insufficient. If the content of the negative electrode active material exceeds 80 % by weight, mass transfer resistance may be increased.

In addition, the binder is the same as described above for the positive electrode active material layer.

In addition, the conductive material is the same as described above for the positive electrode active material layer.

In addition, the negative electrode current collector is not particularly limited as long as it has conductivity without causing chemical change in the battery, and for example, the negative electrode current collector may be copper, stainless steel, aluminum, nickel, titanium, sintered carbon; copper or stainless steel surface-treated with carbon, nickel, titanium, silver, etc.; or aluminum-cadmium alloy. In addition, the negative electrode current collector may be used in various forms, such as a film having fine irregularity on its surface, a sheet, a foil, a net, a porous body, a foam, and a non-woven fabric, as in the positive electrode current collector.

The manufacturing method of the negative electrode is not particularly limited, and may be manufactured by forming a negative electrode active material layer on a negative electrode current collector using a layer or film formation method commonly used in the art. For example, a method such as pressing, coating, or vapor deposition may be used. Also, a case where a thin film of a metal lithium is formed on a metal plate by initial charging after assembling the battery without a lithium thin film on the negative electrode current collector is also included in the negative electrode of the present invention.

In addition, the present invention provides a battery module including the all-solid-state battery as a unit cell, a battery pack including the battery module, and a device including the battery pack as a power source.

In this case, examples of the above device may comprise, but are not limited to, a power tool powered by an electric motor; electric cars including an electric vehicle (EV), a hybrid electric vehicle (HEV), a plug-in hybrid electric vehicle (PHEV), and the like; electric motorcycles including an electric bike (E-bike) and an electric scooter (E-scooter); an electric golf cart; and a power storage system.

Hereinafter, preferred examples are presented to aid understanding of the present invention, but the following examples are only illustrative of the present invention, and it will be apparent to those skilled in the art that various changes and modifications can be made within the scope and technical idea of the present invention, and also it is natural that such variations and modifications are within the scope of the appended claims.

In the following Examples and Comparative Examples, a ceramic ion conductor including a first polymer and a ceramic compound, etc. as described in Table 1 below was prepared, and a composite solid electrolyte including the same was prepared.

Table 1:

| | First polymer | Ceramic compound | Weight ratio of first polymer and ceramic compound | Content of photo-initiator (wt.%) | whether or not UV is irradiated | Whether or not the sintering process is applied | Second polymer | Lithium salt | [Li] / [O] |
|---|---|---|---|---|---|---|---|---|---|
| Example 1 | PIR | LLZO | 1: 2 | 1 | O | O | PVA | LiTFSI | 0.4 |
| Example 2 | PIR | LSTP | 1: 2 | 1 | O | O | PVA | LiTFSI | 0.4 |
| Example 3 | PIR | LLZO | 1: 10 | 1 | O | O | PVA | LiTFSI | 0.4 |
| Example 4 | PIR | LLZO | 10: 1 | 1 | O | O | PVA | LiTFSI | 0.4 |
| Example 5 | PIR | LLZO | 1: 2 | 0.1 | O | O | PVA | LiTFSI | 0.4 |
| Example 6 | PIR | LLZO | 1: 2 | 0.4 | O | O | PVA | LiTFSI | 0.4 |
| Example 7 | PIR | LLZO | 1: 2 | 1 | O | O | PVA | LiTFSI | 0.08 |
| Example 8 | PIR | LLZO | 1: 2 | 1 | O | O | PVA | LiTFSI | 0.52 |
| Example 9 | PIR | LLZO | 1: 2 | 1 | O | O | PEO | LiTFSI | 0.4 |
| Example 10 | PIR | LLZO | 1: 2 | 1 | O | O | PIR | LiTFSI | 0.4 |
| Comparative Example 1 | PIR | LLZO | 1: 2 | 1 | O | X | - | - | - |
| Comparative Example 2 | PIR | LLZO | 1: 2 | 1 | X (simple drying) | X | - | - | - |

### Example 1. Preparation of composite solid electrolyte

#### (1) Preparation of composite

Thiol-ene polyisocyanurate (PIR) was mixed with DI water to prepare a 10 wt.% PIR aqueous solution. To the PIR aqueous solution, LLZO powder, which is a ceramic compound, was added to prepare a solution. 1% by weight of 2-hydroxy-2-methyl-1-phenyl-1-propanone as a photo-initiator was added to the solution. At this time, the weight ratio of PIR and LLZO was set to 1: 2.

The solution was put into a mixer, and then, applied by the bar coating method on SS foil, which is a substrate film supplied to the transfer path by the unwinder, and then it was transferred to the ultraviolet irradiation section, irradiated with ultraviolet (UV), and then cured to induce cross-linkage of PIR, thereby preparing a first composite layer in the form of a cross-linked structure. The substrate film containing the prepared first composite layer was wound and recovered using a rewinder.

#### (2) Preparation of ceramic ion conductor layer

After peeling the first composite layer from the substrate film including the first composite layer supplied to the transport path by the unwinder, the peeled first composite layer was slit into a desired size. The slitted first composite layer was heated from room temperature to 800 °C at a rate of 1 °C/min and sintered at 800 °C for 2 hours to thermally decompose the PIR component contained in the first composite layer, and thus a ceramic ion conductor layer formed by sintering the remaining LLZO particles was prepared.

#### (3) Preparation of composite solid electrolyte

A solution containing PVA and LiTFSI was prepared (wherein the molar ratio ([Li]/[O]) of "O" contained in PVA and "Li" contained in the lithium salt is 0.4). After immersing the ceramic ion conductor layer in the prepared solution for 5 minutes, it was dried in a vacuum drying oven at a temperature of 100 °C for 12 hours to prepare a composite solid electrolyte.

### Example 2

A composite solid electrolyte was prepared in the same manner as in Example 1, except that LSTP is used instead of LLZO, which is a ceramic compound.

### Example 3

A composite solid electrolyte was prepared in the same manner as in Example 1, except that the weight ratio of a UV curable polymer (PIR) and a ceramic compound (LLZO) is 1: 10.

### Example 4

A composite solid electrolyte was prepared in the same manner as in Example 1, except that the weight ratio of a UV curable polymer (PIR) and a ceramic compound (LLZO) is 10: 1.

### Example 5

A composite solid electrolyte was prepared in the same manner as in Example 1, except that 0.1% by weight of the photo-initiator content was used.

### Example 6

A composite solid electrolyte was prepared in the same manner as in Example 1, except that 0.4% by weight of the photo-initiator content was used.

### Example 7

A composite solid electrolyte was prepared in the same manner as in Example 1, except that the molar ratio ([Li]/[O]) of "O" contained in PVA and "Li" contained in lithium salt is 0.08.

**Example 8**

A composite solid electrolyte was prepared in the same manner as in Example 1, except that the molar ratio ([Li]/[O]) of "O" contained in PVA and "Li" contained in lithium salt is 0.52.

**Example 9**

A composite solid electrolyte was prepared in the same manner as in Example 1, except that PEO is used instead of polymer PVA.

**Example 10**

A composite solid electrolyte was prepared in the same manner as in Example 1, except that PIR is used instead of polymer PVA.

**Comparative Example 1**

A composite solid electrolyte was prepared in the same manner as in Example 1, except that after the preparation of the composite, no steps after the sintering process are performed.

**Comparative Example 2**

A composite solid electrolyte was prepared in the same manner as in Comparative Example 1, except that instead of curing after irradiation with ultraviolet rays (UV), it is dried at 80 °C for 2 hours.

**Experimental Example 1**

In order to measure the ionic conductivity of the composite solid electrolytes in the form of films prepared in the Examples and the Comparative Examples, the composite solid electrolyte was punched out in a circle with a size of 1.7671 cm$^2$, and the punched composite solid electrolyte was placed between two sheets of stainless steel (SS) to prepare a coin cell.

Using an electrochemical impedance spectrometer (EIS, VM3, Bio Logic Science Instrument), the resistance was measured under conditions of an amplitude of 10 mV and a scan range of 500 KHz to 20 MHz at 25 °C, and then, using Equation 1 below, the ionic conductivity of the composite solid electrolyte was calculated.

[Equation 1]

$$\sigma_i = \frac{L}{RA}$$

In Equation 1 above, $\sigma i$ is the ionic conductivity (S/cm) of the composite solid electrolyte, R is the resistance ($\Omega$) of the composite solid electrolyte measured by the electrochemical impedance spectrometer, L is the thickness of the composite solid electrolyte ($\mu$m), and A is the area of the composite solid electrolyte (cm$^2$).

The ionic conductivity of the composite solid electrolyte calculated using Equation 1 above, the possibility of forming the free-standing film, and the results of observing the appearance of the composite solid electrolyte are described in Table 2 below. At this time, the possibility of forming the free-standing film (formation: ∘, non-formation: X) and the appearance of the composite solid electrolyte were visually observed.

Table 2:

|  | Ionic conductivity (S/cm) | Possibility of forming the free-standing film | Remarks |
|---|---|---|---|
| Example 1 | 1.5 x 10$^{-5}$ | ○ | - |
| Example 2 | 1.3 x 10$^{-5}$ | ○ | - |

(continued)

|  | Ionic conductivity (S/cm) | Possibility of forming the free-standing film | Remarks |
|---|---|---|---|
| Example 3 | - | X | Impossible to prepare solution (aggregation of ceramic particles) |
| Example 4 | - | X | Impossible to form ion conductor after sintering |
| Example 5 | - | X | Impossible to prepare cross-linked film |
| Example 6 | - | X | Impossible to prepare cross-linked film |
| Example 7 | - | X | Formation of brittle film, difficult to handle, and impossible to measure ionic conductivity |
| Example 8 | - | X | Formation of sticky gel |
| Example 9 | $1.5 \times 10^{-5}$ | ○ | - |
| Example 10 | $1.0 \times 10^{-5}$ | ○ | - |
| Comparative Example 1 | - | X | Since there is no sintering, ceramic ion conductor cannot be formed |
| Comparative Example 2 | - | X | Impossible to prepare cross-linked film |

As shown in Table 2, it was confirmed that a ceramic ion conductor can be formed by UV irradiation and curing of a solution obtained by mixing the first polymer, which is the UV curable polymer, and a ceramic compound in an appropriate weight ratio, and a composite solid electrolyte can be prepared using the ceramic ion conductor prepared through the above process (Examples 1, 2, 9 and 10).

In Examples 3 and 4, it was confirmed that the weight ratio of the first polymer, which is a UV curable polymer, and the ceramic compound exceeds 1: 10 or less than 10: 1, a ceramic ion conductor is not formed. Therefore, it was confirmed that in order to form the ceramic ion conductor layer according to the present invention, the weight ratio of the first polymer and ceramic compound in an appropriate range must be satisfied.

In Examples 5 and 6, it was confirmed that if a suitable range of photo-initiators is not included, it is impossible to prepare a cross-linked film.

In Examples 7 and 8, it was confirmed that when preparing the composite solid electrolyte, if the concentrations of the second polymer and lithium salt are out of the range of 0.1 to 0.5, it is not suitable for the preparation of the desired composite solid electrolyte because it cannot form a film.

Through Comparative Examples 1 and 2, it was found that even if a UV curable polymer is simply used, if UV irradiation and curing are not applied or sintering process is not applied, the ceramic ion conductor or the cross-linked film is not formed.

In the above, although the present invention has been described by way of limited embodiments, the present invention is not limited thereto, and it is apparent to those skilled in the art that various modifications and variations can be made within the equivalent scope of the technical spirit of the present invention and the claims to be described below.

**Claims**

1. A method for preparing a composite solid electrolyte, comprising:

(1) a first process of preparing a first composite layer by mixing a first polymer, which is a UV-curable polymer, a photo-initiator and a ceramic compound;
(2) a second process of preparing a ceramic ion conductor layer by sintering the first composite layer; and
(3) a third process of coating and curing the ceramic ion conductor layer with a composition containing a second polymer and a lithium salt to prepare a second composite layer,

wherein the first to third processes are performed continuously.

2. The method for preparing a composite solid electrolyte according to claim 1, wherein the first polymer comprises one or more selected from the group consisting of polyisocyanurate (PIR), epoxy, polyurethane, polyacrylate, and polymethyl methacrylate (PMMA).

3. The method for preparing a composite solid electrolyte according to claim 1, wherein the ceramic compound comprises one or more selected from the group consisting of lithium-lanthanum-zirconium oxide (LLZO) based, lithium-silicon-titanium phosphate (LSTP) based, lithium-lanthanum-titanium oxide (LLTO) based, lithium-aluminum-titanium phosphate (LATP) based, lithium-aluminum-germanium phosphate (LAGP) based, and lithium-lanthanum-zirconium-titanium oxide (LLZTO) based compounds.

4. The method for preparing a composite solid electrolyte according to claim 1, wherein the ceramic compound is contained in an amount of 1 part by weight or more and less than 10 parts by weight based on 1 part by weight of the first polymer.

5. The method for preparing a composite solid electrolyte according to claim 1, wherein the photo-initiator is contained in an amount of 1 to 5% by weight based on the content of the first polymer.

6. The method for preparing a composite solid electrolyte according to claim 1, wherein the ceramic ion conductor layer comprises a cross-linked structure between the first polymer and the ceramic compound.

7. The method for preparing a composite solid electrolyte according to claim 1, wherein the second polymer comprises one or more selected from the group consisting of polyvinyl alcohol (PVA), polyethylene oxide (PEO), polyacrylate, poly(methyl methacrylate)(PMMA), poly(4-styrenesulfonyl(trifluoromethylsulfonyl)imide)(PSTFSI), polyurethane, nylon, poly(dimethylsiloxane), gelatin, methylcellulose, agar, dextran, poly(vinyl pyrrolidone), poly(acryl amide), poly(acrylic acid), starch-carboxymethyl cellulose, hyaluronic acid-methylcellulose, chitosan, poly(N-isopropylacrylamide), and amino-terminated polyethylene glycol PEG (amino-terminated PEG) .

8. The method for preparing a composite solid electrolyte according to claim 1, wherein the lithium salt comprises one or more selected from the group consisting of $LiNO_3$, $LiOH$, $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, $LiSCN$, $LiC(CF_3SO_2)_3$, $(CF_3SO_2)_2Nli$, and $(FSO_2)_2NLi$.

9. The method for preparing a composite solid electrolyte according to claim 1, wherein the first process comprises the steps of:

    (1-1) preparing a composition for forming the first composite layer containing the first polymer, which is a UV-curable polymer, the photo-initiator and the ceramic compound;
    (1-2) unwinding the substrate film using an unwinder and supplying it to the conveying path;
    (1-3) applying the composition for forming the first composite layer onto the substrate film to form a coating film;
    (1-4) transferring the substrate film on which the coating film is formed to an ultraviolet irradiation section, irradiating the coating film with ultraviolet rays, and then curing to prepare the first composite layer; and
    (1-5) winding and recovering the substrate film comprising the first composite layer using a rewinder.

10. The method for preparing a composite solid electrolyte according to claim 9, further comprising , after the step (1-4), heat aging the substrate film including the first composite layer by transferring the substrate film including the first composite layer to a heat aging section.

11. The method for preparing a composite solid electrolyte according to claim 10, wherein the heat aging is performed at 50 °C to 100 °C.

12. The method for preparing a composite solid electrolyte according to claim 9, further comprising, after the step (1-5), the second process comprises the steps of:

    (2-1) unwinding the substrate film comprising the first composite layer using an unwinder, peeling and slitting the first composite layer from the substrate film; and
    (2-2) sintering the substrate film comprising the slitted first composite layer to prepare the ceramic ion conductor layer.

13. The method for preparing a composite solid electrolyte according to claim 12, wherein the sintering is performed at 800 °C to 1300 °C.

14. The method for preparing a composite solid electrolyte according to claim 12, further comprising, after the step (2-2), the third process comprises the steps of:

(3-1) preparing a composition comprising the second polymer and the lithium salt;
(3-2) coating the ceramic ion conductor layer with the composition; and
(3-3) curing the ceramic ion conductor layer coated with the composition to prepare the second composite layer.

15. The method for preparing a composite solid electrolyte according to claim 14, wherein the curing is thermal curing or UV curing.

16. The method for preparing a composite solid electrolyte according to claim 1, wherein the molar ratio of lithium ([Li]) to the molar concentration ([G]) of the second polymer is 0.1 to 0.5.

17. A composite solid electrolyte prepared by the preparation method of claim 1, comprising a ceramic ion conductor layer containing a ceramic compound; a second polymer; and a lithium salt.

18. An all-solid-state battery comprising the composite solid electrolyte prepared by the preparation method of claim 1.

【Figure 1】

<div style="text-align:center">**INTERNATIONAL SEARCH REPORT**</div>

| International application No. |
| --- |
| **PCT/KR2023/007478** |

**A.      CLASSIFICATION OF SUBJECT MATTER**

**H01M 10/056**(2010.01)i; **H01M 10/052**(2010.01)i

According to International Patent Classification (IPC) or to both national classification and IPC

**B.      FIELDS SEARCHED**

Minimum documentation searched (classification system followed by classification symbols)

H01M 10/056(2010.01); H01B 1/06(2006.01); H01B 13/00(2006.01); H01G 11/56(2013.01); H01M 10/052(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고체 전해질(solid electrolyte), 자외선 경화성 고분자(ultraviolet curable polymer), 광 개시제(photoinitiator), 세라믹(ceramic), 경화(crosslinking), 소결(sintering), 리튬 염(lithium salt)

**C.      DOCUMENTS CONSIDERED TO BE RELEVANT**

| Category* | Citation of document, with indication, where appropriate, of the relevant passages | Relevant to claim No. |
| --- | --- | --- |
| Y | KR 10-2018-0021797 A (QUANTUMSCAPE CORPORATION) 05 March 2018 (2018-03-05)<br>See paragraphs [0004], [0207] and [0212]; and claims 26-28, 92, 98, 102-104, 159 and 177-178. | 1-18 |
| Y | KR 10-2016-0021831 A (HYDRO-QUEBEC) 26 February 2016 (2016-02-26)<br>See paragraphs [0067]-[0070], [0103] and [0118]-[0119]; and figure 2. | 1-18 |
| A | KR 10-2016-0079405 A (HYUNDAI MOTOR COMPANY) 06 July 2016 (2016-07-06)<br>See entire document. | 1-18 |
| A | KR 10-2021-0045832 A (GRINERGY INC.) 27 April 2021 (2021-04-27)<br>See entire document. | 1-18 |
| A | JP 2019-029330 A (INST NUCLEAR ENERGY RESEARCH ROCAEC) 21 February 2019 (2019-02-21)<br>See entire document. | 1-18 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **01 September 2023** | **01 September 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/007478**

| Patent document cited in search report | | | Publication date (day/month/year) | Patent family member(s) | | | Publication date (day/month/year) |
|---|---|---|---|---|---|---|---|
| KR | 10-2018-0021797 | A | 05 March 2018 | CN | 107710455 | A | 16 February 2018 |
| | | | | CN | 107710455 | B | 17 December 2021 |
| | | | | CN | 114388879 | A | 22 April 2022 |
| | | | | EP | 3314681 | A1 | 02 May 2018 |
| | | | | EP | 3314681 | A4 | 06 March 2019 |
| | | | | EP | 3314681 | B1 | 21 July 2021 |
| | | | | EP | 3979382 | A1 | 06 April 2022 |
| | | | | JP | 2018-521173 | A | 02 August 2018 |
| | | | | JP | 2022-017247 | A | 25 January 2022 |
| | | | | JP | 6956641 | B2 | 02 November 2021 |
| | | | | US | 10374254 | B2 | 06 August 2019 |
| | | | | US | 11145898 | B2 | 12 October 2021 |
| | | | | US | 2017-0005367 | A1 | 05 January 2017 |
| | | | | US | 2020-0067137 | A1 | 27 February 2020 |
| | | | | US | 2022-0077495 | A1 | 10 March 2022 |
| | | | | WO | 2016-210371 | A1 | 29 December 2016 |
| KR | 10-2016-0021831 | A | 26 February 2016 | CA | 2820635 | A1 | 21 December 2014 |
| | | | | CA | 2911628 | A1 | 24 December 2014 |
| | | | | CA | 2911628 | C | 02 August 2022 |
| | | | | CN | 105409032 | A | 16 March 2016 |
| | | | | CN | 105409032 | B | 18 October 2019 |
| | | | | EP | 3011615 | A1 | 27 April 2016 |
| | | | | EP | 3011615 | A4 | 22 February 2017 |
| | | | | EP | 3011615 | B1 | 01 April 2020 |
| | | | | ES | 2802926 | T3 | 21 January 2021 |
| | | | | JP | 2016-524803 | A | 18 August 2016 |
| | | | | JP | 6530385 | B2 | 12 June 2019 |
| | | | | KR | 10-2224361 | B1 | 09 March 2021 |
| | | | | US | 10320029 | B2 | 11 June 2019 |
| | | | | US | 2016-0149261 | A1 | 26 May 2016 |
| | | | | WO | 2014-201568 | A1 | 24 December 2014 |
| KR | 10-2016-0079405 | A | 06 July 2016 | KR | 10-1655627 | B1 | 07 September 2016 |
| KR | 10-2021-0045832 | A | 27 April 2021 | KR | 10-2310319 | B1 | 08 October 2021 |
| JP | 2019-029330 | A | 21 February 2019 | TW | 201909465 | A | 01 March 2019 |
| | | | | TW | I667829 | B | 01 August 2019 |
| | | | | US | 2019-0036157 | A1 | 31 January 2019 |

Form PCT/ISA/210 (patent family annex) (July 2022)

**EP 4 439 766 A1**

**REFERENCES CITED IN THE DESCRIPTION**

**Patent documents cited in the description**

- KR 1020220066951
- KR 1020230070146
- KR 1020170045011